# EUROPÄISCHE PATENTSCHRIFT

(11) **EP 3 153 757 B1**
(45) Veröffentlichungstag und Bekanntmachung des Hinweises auf die Patenterteilung: **27.11.2019**
(21) Anmeldenummer: 16192447.7
(22) Anmeldetag: 05.10.2016
(51) Int. Cl.: F16L 37/084, F16L 37/14

(54) **LÖSBARE STECKVERBINDUNG FÜR ROHRLEITUNGEN**
DETACHABLE PLUG CONNECTION FOR PIPES
RACCORD DÉCONNECTABLE

(30) Priorität: 07.10.2015 DE 102015117090
(43) Veröffentlichungstag der Anmeldung: 12.04.2017
(73) Patentinhaber: Johannes Schäfer vormals Stettiner Schraubenwerke GmbH & Co. KG, 35410 Hungen (DE)
(72) Erfinder: Forro, Norbert, 35447 Reiskirchen (DE)
(74) Vertreter: Haar, Lucas Heinz Jörn

(56) Entgegenhaltungen:
- EP-A1- 1 098 128
- DE-A1- 1 525 525
- DE-A1- 2 028 711
- DE-A1- 3 243 811
- US-A1- 2012 104 746

## Beschreibung

Die Erfindung betrifft eine Steckverbindung für Rohrleitungen mit einem eine Aufnahmebohrung aufweisenden Außenteil, einem eine Durchgangsbohrung aufweisenden Innenteil, das mit einem an seinem freien Ende vorliegenden Steckzapfen in die Aufnahmebohrung des Außenteils einsteckbar ist.

Eine Steckverbindung der angegebenen Art ist aus der DE 38 37 492 A1 bekannt. Die offenbarte lösbare Schnell-Steckverbindung umfasst ein Rohrstück, das eine Einführnase und eine Ringwulst aufweist und ein rohrförmiges Anschlussteil. Nachdem das Rohrstück in das Anschlussteil eingeführt ist, wird es mittels einer Hülse gehalten, die das Rohrstück und das Anschlussteil übergreift. Die Hülse weist ein Federelement auf, dass in Nuten des Anschlussteils eingreift und somit das Anschlussteil und das Rohrstück hält.

Ferner beschreibt die DE 296 10 026 U eine Steckkupplung für ein in ein Mundstück auslaufendes Rohr an einem mit einer Durchgangsbohrung versehenen Anschlussstück für eine Rohr- oder Schlauchleitung. Das Mundstück ist in eine zentrale, durch eine Senkung der Durchgangsbohrung gebildete Aufnahmebohrung des Anschlussstücks einführbar und mittels eines Klemmstücks arretierbar.

Eine Steckverbindung zwischen zwei Bauteilen ist in der DE 197 40 115 A1 offenbart. Eine Muffe, die einen zylindrischen Aufnahmekörper aufweist, ist einem ersten Bauteil zugeordnet. In den Aufnahmekörper ist ein zylindrischer Steckkörper eines einem zweiten Bauteils zugeordneten Steckers einsteckbar, wobei Sicherungsmittel vorgesehen sind, die den eingesteckten Stecker in der Muffe sichern. Dies wird dadurch erreicht, dass der Steckkörper im Bereich seines axial freien Endes einen radial nach außen abstehenden ringförmig umlaufenden Wulst aufweist. Im Inneren des Aufnahmekörpers ist eine ringförmige Sitzfläche vorgesehen, auf der der Wulst des eingesteckten Steckers etwas kreislinienförmig aufliegt. Im Aufnahmekörper sind zudem Öffnungen vorgesehen, die etwa in einer axialen Ebene des Aufnahmekörpers liegen. Die Sicherungsmittel sind aus einer U-förmigen Federklammer gebildet, deren Schenkel in die Öffnungen einführbar sind und bei eingestecktem Stecker am Wulst auf dessen Sitzfläche abgewandten Seite axial zur Anlage kommen.

DE 20 28 711 A1 offenbart eine lösbare Rohr- oder Schlauchkupplung mit einem Stecker und einer Stecker-Aufnahmemuffe, bei der ein U-förmiger Verriegelungsbügel in seiner Riegelstellung mit seinen Schenkeln teilweise in eine Mantelringnut des Steckers und teilweise in beiderseits der Muffenbohrung angeordnete und im Muffenmantel mündende Muffen-Ausnehmungen eingreift und die zur Kupplungsachse gerichteten Achsen der Ausnehmungen in Steckereinführrichtung konvergierend schräg verlaufen.

Aus US 2012/0104746 A1 ist eine Schnellkupplungsbaugruppe mit einem einsteckbaren Verriegelungsbügel und Aufnahmen für Endabbiegungen des Bügels bekannt.

Nachteilig bei den bekannten Steckverbindungen ist, dass speziell ausgestaltete Einführrampen an dem Steckteil vorgesehen sein müssen, damit der Verriegelungsstecker durch das Einstecken des Steckteils in den Aufnahmekörper verdrängt wird. Hierbei muss eine hohe Kraft aufgewendet werden, um die elastischen Kräfte des Verriegelungssteckers zu überwinden. Zudem müssen die den Verriegelungsstecker führenden Schlitze eine gewisse Tiefe aufweisen, damit ein Herausspringen des Verriegelungssteckers bei einem Verdrehen des Steckers verhindert wird. Mitunter ist es hierdurch nicht möglich, kompakte Steckverbindungen zu realisieren.

Der Erfindung liegt die Aufgabe zugrunde, eine Steckverbindung bereitzustellen, die die Nachteile der bekannten Steckverbindungen nicht aufweist.

Die Aufgabe wird durch eine Steckverbindung mit den in Anspruch 1 angegebenen Merkmalen gelöst. Vorteilhafte Ausgestaltungen der Steckverbindung sind in den Unteransprüchen angegeben.

Es wird eine Steckverbindung für Rohrleitungen bereitgestellt mit einem eine Aufnahmebohrung aufweisenden Außenteil, einem eine Durchgangsbohrung aufweisenden Innenteil, das mit einem an seinem freien Ende vorliegenden Steckzapfen in die Aufnahmebohrung des Außenteils einsteckbar ist, wobei der Steckzapfen eine Verriegelungsnut aufweist, die in einem zusammengefügten Zustand der Steckverbindung zu an dem Außenteil angeordneten und als Schlitze ausgestalteten Öffnungen zumindest teilweise fluchtend ausgerichtet ist und mit einem Halteelement, das elastisch verformbare Schenkel aufweist, die in einer Verriegelungsstellung durch die Schlitze geführt sind und in die Aufnahmebohrung des Außenteils hineinragen und die durch elastische Deformation in Eingriff mit der Verriegelungsnut des Steckzapfens bringbar sind, wobei die Schlitze zumindest abschnittsweise zu einer senkrecht zur Längsachse des Außenteils verlaufenden Ebene geneigt sind und die Verriegelungsnut derart ausgestaltet ist, dass sich die Schenkel beim Eingreifen in die Verriegelungsnut an einer Seitenfläche derselben und einer Abstützfläche des Außenteils abstützen, so dass der Steckzapfen gegen Herausziehen aus der Aufnahmebohrung verriegelt ist.

Das Innenteil weist eine Verriegelungsnut auf, die im zusammengesteckten Zustand zumindest teilweise fluchtend zu den Öffnungen in dem Außenteil angeordnet ist. Durch die federelastischen Kräfte gleiten die Schenkel des Haltelements geführt durch die Schlitze in die Aufnahmebohrung und rasten in der Verriegelungsnut ein. Ein wesentlicher Vorteil der erfindungsgemäßen Ausgestaltung ist, dass das Halteelement mit seinen Schenkeln an dem Innenteil und dem Außenteil anliegt. Hierdurch entsteht eine axiale Verspannung des Innenteils und ein wackelfreier Sitz.

Durch die geneigten Schlitze können die in der Verriegelungsstellung vorliegenden und in die Aufnahmebohrung ragenden Schenkel des Haltelements einfach durch den Steckzapfen verdrängt werden, ohne dass der Steckzapfen eine Einführnase oder einen größeren Durchmesser aufweisen muss. Die Schenkel werden durch eine Stirnseite des Steckzapfens verdrängt und zusätzlich durch die geneigten Schlitze derart gespreizt, dass der Steckzapfen vorbeigleiten kann, bis die Schenkel in die Verriegelungsnut einrasten können. Dies erhöht die Sicherheit bei dem Zusammenstecken der Steckverbindung. Die Schlitze können derart ausgestaltet sein, dass sie über ihre gesamte Tiefe geneigt sind. Ferner kann es vorteilhaft sein, dass die Schlitze zumindest in ihren Endbereichen zu der senkrecht zur Längsachse des Außenteils verlaufenden Ebene geneigt sind. Hierdurch wird das Herausgleiten der Schenkel aus der Aufnahmebohrung und folglich die Spreizung der Schenkel unterstützt. Die Neigung der Schlitze kann etwa 2° bis 75°, insbesondere 35° bis 60° betragen. Es hat sich herausgestellt, dass eine Neigung der Schlitze von 35° bis 60° besonders kompakte Ausgestaltungen ermöglicht, die mit bekannten Anschlussteilen kompatibel sind. Des Weiteren ist eine Neigung im Bereich von 50° bis 75° bevorzugt, da derart ausgestaltete Schlitze die Verwendung bekannter Halteelemente ermöglichen und zudem eine einfache Demontage der Steckverbindung erlauben. Da ein weiter Vorteil der geneigten Schlitze ist, dass die Steckverbindung kompakter ausgestaltet werden kann, ist die Neigung im Wesentlichen von der zu erreichenden Bauform der Steckverbindung abhängig und kann dementsprechend variiert werden.

Weiterhin wird vorgeschlagen, dass die durch die Öffnungen im Außenteil durchgeführten Schenkel von parallel verlaufenden Seitenwänden der Schlitze seitlich eingefasst sind. Hierdurch wird ein Gleiten der Schenkel in die Aufnahmebohrung hinein aber auch aus dieser heraus unterstützt. Diesbezüglich ist es bevorzugt, dass die einem zweiten Ende des Außenteils benachbarten Seitenwände der Schlitze in ihrer axialen Erstreckung kreisbogenförmig ausgebildet sind und die Öffnungen überragen. Die Schlitze werden insbesondere von einer inneren und einer äußeren Seitenwand gebildet, wobei insbesondere die äußere Seitenwand eine kreisbogenförmige Nase aufweist, die in ihrer axialen Erstreckung die Öffnung überragt. Hierdurch kann insbesondere ein Herausspringen des Halteelements verhindert und eine exakte Führung der Schenkel erreicht werden.

Ein weiterer Vorteil der Erfindung ist, dass das Halteelement mit dem Außenteil dauerhaft verbunden ist und somit nicht verloren gehen kann. Diesbezüglich wird vorgeschlagen, dass Endabbiegungen der Schenkel in einer Vorverriegelungsstellung in Ausnehmungen im Außenteil eingreifen und die Schenkel in einer Spreizstellung außerhalb der Aufnahmebohrung des Außenteils halten. Das Halteelement ist insbesondere ein einstückiges Bauteil aus Draht, zum Beispiel ein geschlitzter Sprengring, bei dem sich die freien Enden zu Endabbiegungen umbiegen lassen. Auch kann das Halteelement etwa U-förmig ausgestaltet sein. Die Endabbiegungen können in der Vorverriegelungsstellung in den Ausnehmungen im Außenteil aufliegen. Die Ausnehmungen können in eine Mantelfläche des Außenteils gefräst sein.

Ferner ist bevorzugt, dass die Schenkel durch Zug an einem Steg des Halteelementes spreizbar und aus der Verriegelungsstellung in die Vorverriegelungsstellung und umgekehrt durch Druck an dem Steg aus der Vorverriegelungsstellung in die Verriegelungsstellung bringbar sind. Das Halteelement kann einen Steg zwischen den Schenkeln aufweisen. Wenn das Halteelement in der Verriegelungsstellung ist, können die Schenkel aus der Aufnahmebohrung herausbewegt werden, indem per Hand oder mit einem Werkzeug, beispielsweise einem Schraubendreher, an dem Steg gezogen oder in einen Raum zwischen Außenteil und Steg angesetzt und ein Zug auf den Steg ausgeübt wird. Hierdurch gleiten die Schenkel aus der Aufnahmebohrung durch die Schlitze in die Ausnehmung im Außenteil, so dass eine einfache Demontage der Steckverbindung möglich ist, ohne von der Verwendung eines speziellen Werkzeuges abhängig zu sein. In dieser Stellung können sie vorteilhafterweise nicht weiter bewegt werden. Wenn Druck auf den Steg ausgeübt wird, können die Schenkel aus der Vorverriegelungsstellung in die Verriegelungsstellung gebracht werden und gleiten aus der Ausnehmung, geführt durch die Schlitze in die Aufnahmebohrung.

Die Steckverbindung kann auch hergestellt werden, wenn das Halteelement, genauer die Schenkel in der Vorverriegelungsstellung sind. Nachdem das Innenteil mit dem Steckzapfen voran in die Aufnahmebohrung eingeführt ist und die Verriegelungsnut zumindest teilweise fluchtend zu den Öffnungen liegt, können die Schenkel durch Druck auf den Steg in die Verriegelungsstellung gebracht werden, in der sie wiederum mit der Verriegelungsnut in Eingriff sind.

Möglich ist jedoch auch, dass die Schenkel bereits vor dem Einstecken des Steckzapfens in die Aufnahmebohrung die Verriegelungsstellung einnehmen. Vorteilhafterweise sind die in der Verriegelungsstellung vorliegenden und in die Aufnahmebohrung hineinragenden Schenkel beim Einstecken des Innenteils in die Aufnahmebohrung durch radiale elastische Deformation in die Verriegelungsnut verdrängbar. Die Schenkel werden beim Einstecken des Innenteils auseinandergespreizt, da insbesondere der Innendurchmesser der Schenkel kleiner ist als der Außendurchmesser des Steckzapfens. Die Schenkel gleiten auf dem Steckzapfen, bis sie zur Anlage in der Verriegelungsnut gebracht werden. Diese Montageart ist problemlos möglich, da die Neigung der Schlitze die Spreizung der Schenkel und eine Verdrängung der Schenkel durch den Steckzapfen unterstützt.

Damit die Schenkel nicht vollständig in der Verriegelungsnut versinken, kann vorgesehen sein, dass die Verriegelungsnut eine Tiefe aufweist, die kleiner ist als der Durchmesser der Schenkel. Hierdurch kommen die Schenkel in der Verriegelungsstellung und bei eingeführten Steckzapfen mit der Verriegelungsnut und der Abstützfläche des Außenteils in Kontakt. Es kann jedoch auch vorgesehen sein, dass die Verriegelungsnut eine Tiefe aufweist, die nicht kleiner sondern größer ist als der Durchmesser der Schenkel. In dieser Ausgestaltung können Hilfsmittel in der Verriegelungsnut dazu verwendet werden, ein vollständiges Versinken der Schenkel in der Verriegelungsnut zu verhindern. Solche Hilfsmittel können beispielsweise Rippen oder partielle Verengungen sein, die in der Verriegelungsnut vorliegen.

Erfindungsgemäß ist vorgesehen, dass ein das Innenteil umlaufendes und im zusammengesteckten Zustand der Steckverbindung gespanntes Stützelement sich in axialer Richtung einerseits an dem Außenteil und anderseits an dem Innenteil abstützt. Das Stützelement kann als Axialfeder oder als O-Ring ausgestaltet sein und drückt Innenteil und Außenteil axial auseinander. Das Stützelement kann zudem als Dichtung fungieren. Um das Stützelement in seiner Position zu halten, ist das Innenteil mit einem Ringwulst oder einer Ausnehmung versehen, der oder die mit dem Stützelement formschlüssig in Eingriff bringbar ist. Hierdurch wird das Stützelement auch beim Lösen der Steckverbindung in seiner Position gehalten. Außerdem unterstützt das Stützelement die Demontage der Steckverbindung, da es nach Entfernung des Halteelements aus der Verriegelungsnut das Innenteil bereits in geringen Maße aus dem Außenteil drückt.

Um das Stützelement axial zu sichern und ein Verrutschen zu verhindern, kann vorgesehen sein, dass der Steckzapfen in ein koaxiales Anschlussteil größeren Durchmessers übergeht, das als Anschlag zur axialen Sicherung des Stützelements dient.

Erfindungsgemäß wird vorgeschlagen, dass das Außenteil eine umlaufende und in eine durch eine Nut im Außenteil gebildete ringförmige Sitzfläche eingreifende Dichtung aufweist, die im zusammengesteckten Zustand am Steckzapfen abdichtend anliegt. Durch die Dichtung wird ein durch die Bohrungen geleitetes Fluid abgedichtet, wobei eine weitere zusätzliche Dichtung zwischen Außenteil und Innenteil vorgesehen sein kann.

Weiterhin wird vorgeschlagen, dass die Schlitze in eine in der Aufnahmebohrung eingebrachten Ringnut münden. Hierdurch kann eine kegelförmige Abstützfläche bereitgestellt werden, die eine größere Anlagefläche für die Schenkel des Halteelementes bilden und wodurch die Schenkel in Eingriff mit der Verriegelungsnut in ihrer Position zumindest bereichsweise eingeklemmt werden.

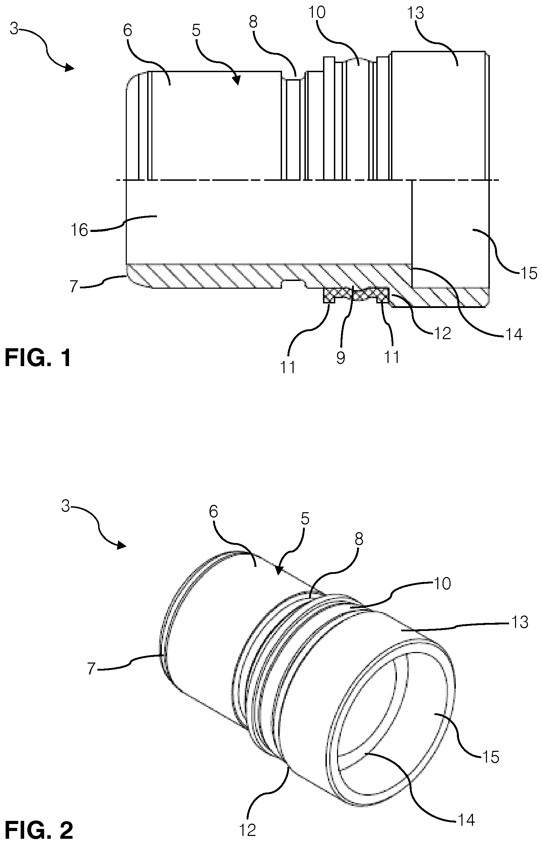

Die Erfindung wird nachfolgend anhand von Ausführungsbeispielen der Erfindung näher erläutert, die in der Zeichnung dargestellt sind. Es zeigen
- Figur 1: ein Innenteil einer Steckverbindung, teilweise im Längsschnitt,
- Figur 2: eine perspektivische Darstellung des Innenteils,

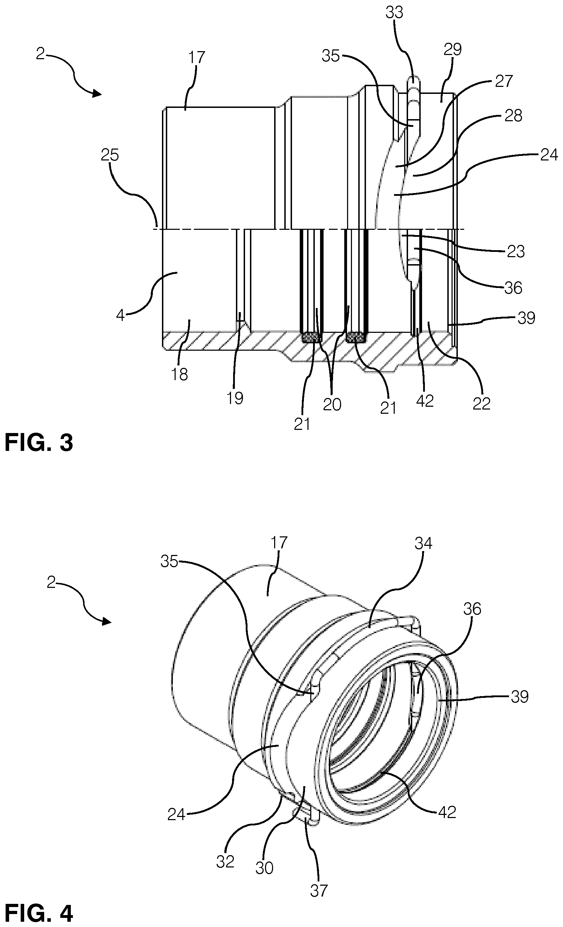

- Figur 3: ein Außenteil einer Steckverbindung mit Halteelement in der Verriegelungsstellung, teilweise im Längsschnitt,
- Figur 4: eine perspektivische Darstellung des Außenteils,
- Figur 5: eine Steckverbindung im zusammengesteckten Zustand, teilweise im Längsschnitt und
- Figur 6: eine perspektivische Darstellung der Steckverbindung im zusammengesteckten Zustand.

Die Steckverbindung 1 besteht aus einem Außenteil 2 und einem Innenteil 3, die lösbar miteinander verbunden sind. An das Innenteil 3 kann eine Druckleitung angeschlossen werden. Das Außenteil 2 kann beispielsweise mittels eines nicht dargestellten Außengewindes an ein Gehäuse angeschlossen werden. Das Außenteil 2 weist eine Aufnahmebohrung 4 auf, in das das Innenteil 3 mit einem, an seinem freien Ende vorliegenden Steckzapfen 5 eingesteckt wird. Das Außenteil 2 und das Innenteil 3 können aus einem Metall bestehen, wobei andere Werkstoffe, wie zum Beispiel Kunststoff, ebenfalls verwendbar sind.

Das Innenteil 3 weist am freien Ende des Steckzapfens 5 einen in Steckrichtung liegenden vorderen zylindrischen Endbereich 6 auf, der eine Einführschräge 7 umfassen kann. Der zylindrische Endbereich 6 kann jedoch auch ohne die Einführschräge 7 ausgestaltet sein. In dem zylindrischen Endbereich 6 liegt eine Verriegelungsnut 8, die als umlaufende Nut oder als diametral gegenüberliegende Nuten vorgesehen sein kann.

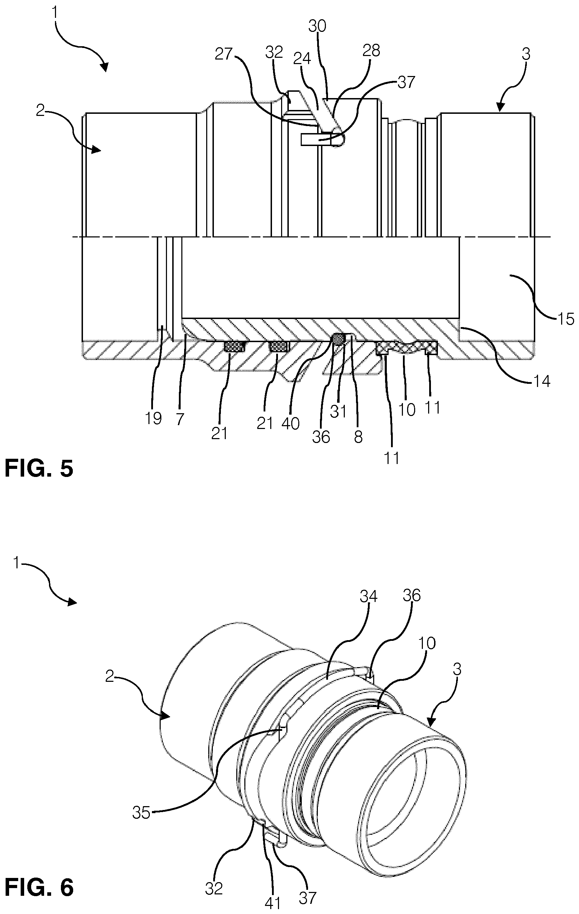

An die Verriegelungsnut 8 schließt sich ein Ringwulst 9 an, der mit einem Stützelement 10 formschlüssig in Eingriff gebracht ist. Das Stützelement 10 weist hierbei einen mittleren erhabenen und auf dem Wulst aufliegenden Bereich und seitliche Bereiche auf, die Anschlagselemente 11 für das Außenteil 2 und das Innenteil 3 bilden. Hierbei kann das Stützelement 10 als eine aus einem elastomeren Material bestehende Axialfeder ausgestaltet sein. Anstelle einer Axialfeder kann jedoch auch ein O-Ring, das heißt insbesondere ein geschlossener Ring aus einem gummielastischen Material von kreisförmigem Querschnitt vorgesehen sein, der dann entsprechend mit einer Ausnehmung anstelle eines Wulstes formschlüssig in Eingriff gebracht wird. Das als Axialfeder oder O-Ring ausgestaltete Stützelement 10 wird im zusammengesteckten Zustand der Steckverbindung gespannt und stützt sich in axialer Richtung einerseits an dem Außenteil 2 und anderseits an dem Innenteil 3 ab, was in den Figuren 5 und 6 erkennbar ist. Das Stützelement 10 liegt an einem Absatz 12 eines koaxial zum Steckzapfen 5 ausgerichteten Anschlussteils 13 an, das einen größeren Durchmesser als der Steckzapfen 5 aufweist und zylindrisch ausgeformt ist.

Das Innenteil 3 hat eine Durchgangsbohrung 16, die über die gesamte Länge des Innenteils 3 einen im Wesentlichen gleichbleibenden Durchmesser hat und erst an dem dem freien Ende entgegengesetzten Ende im Bereich des Anschlussteils 13 durch eine Stufe 14 unterbrochen wird und in einen Aufnahmebereich 15 größeren Durchmessers mündet. In den Aufnahmebereich 15 des Anschlussteils 13 kann die Druckleitung eingeführt werden.

Das Außenteil 2 weist eine durchgehende Aufnahmebohrung 4 auf, deren Innenabmessungen an die Außenabmessungen des Innenteils 3 angepasst sind. Die Aufnahmebohrung 4 hat am ersten Ende 17 einen zylindrisch ausgestalteten Verbindungsbereich 18, der durch eine Rille 19 unterbrochen ist, die beispielsweise mit einem entsprechend ausgeformten Verbindungsteil eines Gehäuses in Eingriff gebracht werden kann. Das Außenteil 2 weist zwei umlaufende Nuten 20 auf, die jeweils eine ringförmige Sitzfläche für eine eingreifende Dichtung 21 bilden. Im zusammengesteckten Zustand der Steckverbindung 1 liegen die Dichtungen 21 dichtend am Steckzapfen 5 des Innenteils 3 an. Die Dichtungen 21 können aus einem gummielastischen Material bestehen und als Abdichtungen gegenüber Flüssigkeiten oder Schmutz dienen.

Nahe dem zweiten Ende 22 des Außenteils 2 befinden sich diametral gegenüberliegende Öffnungen 23, die als gleich ausgebildete und gegenüberliegend angeordnete Schlitze 24 das Außenteil 2 durchbrechen. Die Schlitze 24 sind zumindest abschnittsweise zu einer senkrecht zur Längsachse 25 des Außenteils 2 verlaufenden Ebene geneigt. Bei dem dargestellten Beispiel haben die Schlitze 24 über ihre gesamte Tiefe einen Neigungswinkel von circa 60°. Die Schlitze 24 sind von im Wesentlichen parallel verlaufenden Seitenwänden 27, 28 eingefasst, die jeweils durch eine innere 27 und eine äußere 28 Seitenwand gebildet werden. Die Seitenwände 27, 28 können auch nur über einen begrenzten Bereich parallel verlaufen. Die äußere Seitenwand 28 weist in der Mantelfläche 29 des Außenteils 2 eine kreisbogenförmige Nase 30 auf, die in ihrer axialen Erstreckung die Öffnung 23 überragt. Die innere Seitenwand 27 kann eine zu der Nase 30 komplementäre kegelförmige Fläche aufweisen. Die äußere Seitenwand 28 geht mit einer Abstützfläche 31 in die Aufnahmebohrung 4 über. In der Mantelfläche 29 des Außenteils 2 sind zudem als Auflagen ausgestaltete Ausnehmungen 32 vorgesehen.

In die Schlitze 24 greift ein Halteelement 33 ein, das als elastisch verformbarer geschlitzter Sprengring ausgestaltet ist. Das Halteelement 33 kann in etwa U-förmig sein und beispielsweise aus Federstahl oder Kunststoff bestehen. Das Halteelement 33 hat einen Steg 34 und sich an diesen anschließende spiegelbildliche Schenkel 35, 36, die gerade oder gebogen ausgestaltet sein können. Die Schenkel 35, 36 münden in Endabbiegungen 37, die rechtwinklig von den Schenkeln 35, 36 abragen. Die Endabbiegungen 37 können derart ausgestaltet sein, dass sie in die der Einsteckrichtung des Innenteils 3 entgegengesetzten Richtung ragen, um hierdurch eine Verletzungsgefahr beim Zusammenstecken der Steckverbindung 1 zu minimieren.

An dem zweiten Ende 22 des Außenteils 2, in das der Steckzapfen 5 des Innenteils 3 gesteckt wird, mündet ein zylindrischer Abschnitt in eine kegelförmige Erweiterung 39, die das Einstecken des Steckzapfens 5 in die Aufnahmebohrung 4 vereinfachen soll.

Figuren 5 und 6 zeigen den Zustand der Steckverbindung 1, bei dem das Innenteil 3 mit seinem Steckzapfen 5 in die Aufnahmebohrung 4 des Außenteils 2 gesteckt ist. In einer Verriegelungsstellung durchbricht das Halteelement 33 mit seinen Schenkeln 35, 36, geführt durch die Schlitze 24, die Öffnungen 23 und ragt in die Aufnahmebohrung 4 des Außenteils 2 hinein. Sofern das Innenteil 3 mit seinem Steckzapfen 5 in das Außenteil 2 eingebracht vorliegt, ist die Verriegelungsnut 8 zumindest teilweise fluchtend zu den Öffnungen 23 ausgerichtet, so dass die Schenkel 35, 36 in die Verriegelungsnut 8 des Innenteils 3 eingreifen. Das Halteelement 33 übt eine Federspannung auf das Innenteil 3, genauer die Verriegelungsnut 8 des Innenteils 3 aus und steht so klemmend mit ihm in Eingriff. Die Verriegelungsnut 8 ist zudem derart ausgestaltet, dass sich die Schenkel 35, 36 beim Eingreifen in die Verriegelungsnut 8 an einer Seitenfläche 40 der Verriegelungsnut 8 und der Abstützfläche 31 der Schlitze 24 abstützen, so dass der Steckzapfen 5 gegen Herausziehen aus der Aufnahmebohrung 8 verriegelt ist. Das heißt, jeweils eine Teilfläche der kreisförmig ausgestalteten Schenkel 35, 36 liegt an der Seitenfläche 40 der Verriegelungsnut an und jeweils eine weitere Teilfläche der Schenkel 35, 36 stützt sich an der Abstützfläche 31 der Schlitze 24 ab. Diese Ausgestaltung führt dazu, dass das Halteelement 33 nicht nur auf Abscherung sondern auch auf Druck belastet wird, da sich die Schenkel 35, 36 an der Verriegelungsnut 8 und dem Außenteil 2, genauer der Abstützfläche 31 des Außenteils abstützen. Dies kann beispielsweise dadurch erreicht werden, dass die Verriegelungsnut 8 eine Tiefe aufweist, die kleiner ist als der Durchmesser der Schenkel 35, 36, so dass die Schenkel 35, 36 nicht vollständig in der Verriegelungsnut 8 versinken und zusätzlich an der Abstützfläche 31 anliegen. Zudem ist die Verriegelungsnut 8 lediglich zum Teil fluchtend zu den Öffnungen 23 angeordnet und mündet nahe der Abstützfläche 31, so dass ein Anliegen der in der Verriegelungsnut 8 eingreifenden Schenkel 35, 36 an der Abstützfläche 31 möglich ist. Die Schenkel 35, 36 können durch die Ausgestaltung der Verriegelungsnut 8 bereits in dieser eingeklemmt werden. Die Abstützfläche 31 wird durch eine Schulter im Übergang der Schlitze 24 in die Aufnahmebohrung 4 gebildet, wobei es vorteilhaft sein kann, wenn die Abstützfläche 31 kegelförmig ausgestaltet ist. Dies kann beispielsweise dadurch erreicht werden, dass eine Ringnut 42 in die Aufnahmebohrung 4 des Außenteils 2 eingebracht wird, so dass ein Teil der Schulter 40 weggefräst wird. Die kegelförmige Abstützfläche 31 kann jedoch auch dadurch bereitgestellt werden, indem vor Einbringen der Schlitze 24 in das Außenteil 2 die Ringnut 42 gefertigt wird und bei der Einbringung der Schlitze 24 ein Teil der Ringnut 42 entfernt wird, so dass die Schulter eine kegelförmige Abstützfläche aufweist.

Sofern ein Fluid durch die Steckverbindung 1 geleitet wird, erfolgt eine Abdichtung gegen das in den Bohrungen 4, 16 geführte Fluid durch die Dichtungen 21. Zudem übt das im zusammengesteckten Zustand gespannte Stützelement 10 eine Dichtfunktion gegenüber Schmutz und Feuchtigkeit aus.

Um das Innenteil 3 aus dem Außenteil 2 zu lösen und die Steckverbindung 1 zu unterbrechen, kann mithilfe eines Werkzeuges in einen Raum zwischen Steg 34 des Halteelements 33 und Mantelfläche 29 des Außenteils 2 eingegriffen und ein Zug auf den Steg 34 ausgeübt werden, so dass die Schenkel 35, 36 über die kegelförmige Abstützfläche 31 in die Schlitze 24 gleiten. Hierbei erfahren die Schenkel 35, 36 eine Spreizung und folglich eine elastische Deformation, mit der sie aus der Verriegelungsstellung bewegt werden. Der Zug auf den Steg 34 wird solange ausgeführt, bis die Endabbiegungen 37 über die Schulter 41 in der Mantelfläche 29 des Außenteils 2 in Ausnehmungen 32 gleiten, in denen die Schenkel 35, 36 in einer Spreizstellung sind und ein weiterer Zug am Steg 34 nicht mehr möglich ist. In dieser Endposition befindet sich das Halteelement 33 in einer Vorverriegelungsstellung, in der die Schenkel 35, 36 nicht in die Aufnahmebohrung 4 des Außenteils 2 ragen und sich somit nicht in Eingriff mit der Verriegelungsnut 8 befinden und der Steckzapfen 5 aus der Aufnahmebohrung 4 gezogen werden kann.

Soll die Steckverbindung 1 wieder hergestellt werden, kann das Halteelement 33 aus der Vorverriegelungsstellung in die Verriegelungsstellung gebracht werden, indem Druck auf den Steg 34 ausgeübt wird, so dass die Endabbiegungen 37 aus den Ausnehmungen 32 über die Schulter 41 in der Mantelfläche 29 gleiten und die Schenkel 35, 36 in die Schlitze 24 gleiten und in die Aufnahmebohrung 4 ragen. Wenn nun das Innenteil 3 mit dem Steckzapfen 5 in die Aufnahmebohrung 4 eingeführt wird, kommt seine Einführschräge 7 oder der zylindrische Endbereich 6 mit den Schenkeln 35, 36 in Kontakt. Dadurch, dass der Innendurchmesser der Schenkel 35, 36 kleiner ist als der Außendurchmesser des Steckzapfens 5 und durch die Neigung der Schlitze 24 erfahren die Schenkel 35, 36 eine radiale elastische Deformation und gleiten über den zylindrischen Endbereich 6, bis sie aufgrund ihrer elastischen Kräfte in die Verriegelungsnut 8 rasten. Das Innenteil 3 wird somit im Außenteil 2 verriegelt.

Um die Steckverbindung wieder herzustellen, kann jedoch das Halteelement 33 bei dem Einstecken des Innenteils 3 in das Außenteil 2 in der Vorverriegelungsstellung verbleiben, in der die Endabbiegungen 37 der Schenkel 35, 36 in den Ausnehmungen 32 in einer Spreizstellung aufliegen. Sobald das Innenteil 3 vollständig in das Außenteil 2 eingeführt ist und sich das gespannte Stützelement 10 in axialer Richtung einerseits an dem Außenteil 2 und anderseits an dem Innenteil 3 abstützt und keine weiteres Hineinbewegen des Innenteils 3 in die Aufnahmebohrung 4 mehr möglich ist, können die Schenkel 35, 36 durch Druck auf den Steg 34 in die Verriegelungsstellung gebracht werden. Hierbei gleiten die Schenkel 35, 36 aufgrund der elastischen Kräfte, geführt durch die Schlitze 24 durch die Öffnungen 23 in die Aufnahmebohrung 4 und kommen mit der fluchtend zu den Öffnungen 23 angeordneten Verriegelungsnut 8 des Steckzapfens 5 in Eingriff.

Um das Einstecken des Innenteils 3 in das Außenteil 2 zu vereinfachen, kann das Innenteil 3 Hilfsmittel, wie beispielsweise von seiner Mantelfläche abstehende Rampen oder Nasen aufweisen, die in entsprechend ausgestaltete Aufnahmemittel, wie beispielsweise Rillen oder Ausnehmungen, in der Aufnahmebohrung 4 des Außenteils 2 eingreifen und somit ein gerichtetes Einführen des Innenteils 3 sicherstellen.

## Patentansprüche

1. Steckverbindung (1) für Rohrleitungen mit einem eine Aufnahmebohrung (4) aufweisenden Außenteil (2), einem eine Durchgangsbohrung (16) aufweisenden Innenteil (3), das mit einem an seinem freien Ende vorliegenden Steckzapfen (5) in die Aufnahmebohrung (4) des Außenteils (2) einsteckbar ist, wobei der Steckzapfen (5) eine Verriegelungsnut (8) aufweist, die in einem zusammengefügten Zustand der Steckverbindung (1) zu an dem Außenteil (2) angeordneten und als Schlitze (24) ausgestalteten Öffnungen (23) zumindest teilweise fluchtend ausgerichtet ist und mit einem Halteelement (33), das elastisch verformbare Schenkel (35, 36) aufweist, die in einer Verriegelungsstellung durch die Schlitze (24) geführt sind und in die Aufnahmebohrung (4) des Außenteils (2) hineinragen und die durch elastische Deformation in Eingriff mit der Verriegelungsnut (8) des Steckzapfens (5) bringbar sind, wobei die Schlitze (24) zumindest abschnittsweise zu einer senkrecht zur Längsachse (25) des Außenteils (2) verlaufenden Ebene geneigt sind und die Verriegelungsnut (8) derart ausgestaltet ist, dass sich die Schenkel (35, 36) beim Eingreifen in die Verriegelungsnut (8) an einer Seitenfläche derselben und einer Abstützfläche (31) des Außenteils (2) abstützen, so dass der Steckzapfen (5) gegen Herausziehen aus der Aufnahmebohrung (4) verriegelt ist, **dadurch gekennzeichnet, dass** sich ein das Innenteil (3) umlaufendes und formschlüssig mit einem Ringwulst (9) oder einer Ausnehmung des Innenteils (3) in Eingriff gebrachtes Stützelement (10) im zusammengesteckten Zustand der Steckverbindung (1) in axialer Richtung einerseits an dem Außenteil (2) und anderseits an dem Innenteil (3) abstützt und im zusammengesetzten Zustand gespannt ist.

2. Steckverbindung (1) nach Anspruch 1, **dadurch gekennzeichnet, dass** Endabbiegungen (37) der Schenkel (35, 36) in einer Vorverriegelungsstellung in Ausnehmungen (32) im Außenteil (2) eingreifen und die Schenkel (35, 36) in einer Spreizstellung außerhalb der Aufnahmebohrung (4) des Außenteils (2) halten.

3. Steckverbindung (1) nach Anspruch 2, **dadurch gekennzeichnet, dass** die Schenkel (35, 36) durch Zug an einem Steg (34) des Halteelementes (33) spreizbar und aus der Verriegelungsstellung in die Vorverriegelungsstellung und umgekehrt durch Druck an dem Steg (34) aus der Vorverriegelungsstellung in die Verriegelungsstellung bringbar sind.

4. Steckverbindung (1) nach einem der vorhergehenden Ansprüche, **dadurch gekennzeichnet, dass** die in der Verriegelungsstellung vorliegenden und in die Aufnahmebohrung hineinragenden Schenkel (35, 36) beim Einstecken des Innenteils (3) in die Aufnahmebohrung (4) durch radiale elastische Deformation in die Verriegelungsnut (8) verdrängbar sind.

5. Steckverbindung (1) nach einem der vorhergehenden Ansprüche, **dadurch gekennzeichnet, dass** die Verriegelungsnut (8) eine Tiefe aufweist, die kleiner ist als der Durchmesser der Schenkel (35, 36), so dass die Schenkel (35, 36) nicht vollständig in der Verriegelungsnut (8) versinken.

6. Steckverbindung (1) nach einem der vorhergehenden Ansprüche, **dadurch gekennzeichnet, dass** der Steckzapfen (5) in ein koaxiales Anschlussteil (13) größeren Durchmesser übergeht, das als Anschlag zur axialen Sicherung des Stützelements (10) dient.

7. Steckverbindung (1) nach einem der vorhergehenden Ansprüche, **dadurch gekennzeichnet, dass** das Außenteil (2) eine umlaufende und in eine durch eine Nut (20) im Außenteil (2) gebildete ringförmige Sitzfläche eingreifende Dichtung (21) aufweist, die im zusammengesteckten Zustand am Steckzapfen (5) abdichtend anliegt.

8. Steckverbindung (1) nach einem der vorhergehenden Ansprüche, **dadurch gekennzeichnet, dass** die durch die Öffnungen (23) durchgeführten Schenkel (35, 36) von parallel verlaufenden Seitenwänden (27, 28) der Schlitze (24) seitlich eingefasst sind.

9. Steckverbindung (1) nach einem der vorhergehenden Ansprüche, **dadurch gekennzeichnet, dass** die einem zweiten Ende (22) des Außenteils (2) benachbarten Seitenwände (28) der Schlitze (24) in ihrer axialen Erstreckung kreisbogenförmig ausgebildet sind und die Öffnungen (23) überragen.

10. Steckverbindung (1) nach einem der vorhergehenden Ansprüche, **dadurch gekennzeichnet, dass** die Schlitze (24) zumindest in ihren Endbereichen zu der senkrecht zur Längsachse (25) des Außenteils (2) verlaufenden Ebene geneigt sind.

11. Steckverbindung (1) nach einem der vorhergehenden Ansprüche, **dadurch gekennzeichnet, dass** die Neigung der Schlitze (24) etwa 2° bis 75° beträgt.

12. Steckverbindung (1) nach einem der vorhergehenden Ansprüche, **dadurch gekennzeichnet, dass** die Schlitze (24) in eine in der Aufnahmebohrung (4) eingebrachten Ringnut (42) münden.

## Claims

1. Plug connection (1) for pipes with an outer part (2) having a receiving bore (4), an inner part (3) having a through bore (16), which inner part can be inserted into the receiving bore (4) of the outer part (2) with a plug-in pin (5) present at its free end, the plug-in pin (5) having a locking groove (8) which, in an joined together state of the plug connection (1), is at least partially aligned with openings (23) arranged on the outer part (2) and designed as slots (24), and having a retaining member (33), which has elastically deformable legs (35, 36), which, in a locking position, are guided through the slots (24) and project into the receiving bore (4) of the outer part (2) and which can be brought into engagement with the locking groove (8) of the plug-in pin (5) by elastic deformation, the slots (24) being inclined at least in sections with respect to a plane extending perpendicularly to the longitudinal axis (25) of the outer part (2), and the locking groove (8) being designed in such a way that the legs (35, 36), when engaging in the locking groove (8), are supported on a side surface thereof and a support surface (31) of the outer part (2), so that the plug-in pin (5) is locked against being pulled out of the receiving bore (4), **characterized in that** a support member (10) which revolves around the inner part (3) and is brought into positive engagement with an annular bead (9) or a recess of the inner part (3), is supported in the assembled state of the plug connection (1) in the axial direction on the one hand on the outer part (2) and on the other hand on the inner part (3) and is clamped in the assembled state.

2. Plug connection (1) according to claim 1, **characterized in that** end bends (37) of the legs (35, 36) in a pre-locking position engage in recesses (32) in the outer part (2) and hold the legs (35, 36) in a spreading position outside the receiving bore (4) of the outer part (2).

3. Plug connection (1) according to claim 2, **characterized in that** the legs (35, 36) are spreadable by pulling a bar (34) of the retaining member (33) and can be moved from the locking position to the pre-locking position and vice versa by applying pressure on the bar (34) from the pre-locking position to the locking position.

4. Plug connection (1) according to one of the preceding claims, **characterized in that** the legs (35, 36) present in the locking position and projecting into the receiving bore are displaceable by radial elastic deformation into the locking groove (8) when the inner part (3) is inserted into the receiving bore (4).

5. Plug connection (1) according to one of the preceding claims, **characterized in that** the locking groove (8) has a depth which is smaller than the diameter of the legs (35, 36), so that the legs (35, 36) do not completely sink into the locking groove (8).

6. Plug connection (1) according to one of the preceding claims, **characterized in that** the plug-in pin (5) merges into a coaxial connection part (13) of a larger diameter, which serves as a stop for axially securing the support member (10).

7. Plug connection (1) according to one of the preceding claims, **characterized in that** the outer part (2) has a circumferential seal (21) which engages an annular seat surface formed by a groove (20) in the outer part (2) and which, in the assembled state, lies tightly against the plug-in pin (5).

8. Plug connection (1) according to one of the preceding claims, **characterized in that** the legs (35, 36) passing through the openings (23) are laterally enclosed by parallel side walls (27, 28) of the slots (24).

9. Plug connection (1) according to one of the preceding claims, **characterized in that** the side walls (28) of the slots (24) adjacent to a second end (22) of the outer part (2) are circular in shape in their axial extension and project beyond the openings (23).

10. Plug connection (1) according to one of the preceding claims, **characterized in that** the slots (24) are inclined at least in sections with respect to a plane extending perpendicularly to the longitudinal axis (25) of the outer part (2).

11. Plug connection (1) according to one of the preceding claims, **characterized in that** the inclination of the slots (24) is about 2° to 75°.

12. Plug connection (1) according to one of the preceding claims, **characterized in that** the slots (24) open into an annular groove (42) inserted into the receiving bore (4).

## Revendications

1. Raccord enfichable (1) pour tuyauteries comprenant une partie extérieure (2) munie d'un alésage de réception (4), une partie intérieure (3) munie d'un alésage de passage (16) et qui peut être enfichée dans l'alésage de réception (4) de la partie extérieure (2) par un tenon d'enfichage (5) présent à son extrémité libre, le tenon d'enfichage (5) présentant une rainure de verrouillage (8) qui, à l'état monté du raccord enfichable (1), est au moins partiellement alignée avec des ouvertures (23) disposées sur la partie extérieure (2) et réalisées sous la forme de fentes (24), et un élément de retenue (33) muni de branches (35, 36) déformables élastiquement qui, dans une position de verrouillage, sont guidées à travers les fentes (24) et saillent dans l'alésage de réception (4) de la partie extérieure (2) et peuvent être mises en prise par déformation élastique avec la rainure de verrouillage (8) du tenon d'enfichage (5), les fentes (24) étant inclinées, au moins par zones, par rapport à un plan s'étendant perpendiculairement à l'axe longitudinal (25) de la partie extérieure (2), et la rainure de verrouillage (8) étant conçue de telle sorte que les branches (35, 36), quand elles sont en prise avec la rainure de verrouillage (8), sont en appui sur une face latérale de celle-ci et sur une face d'appui (31) de la partie extérieure (2), de sorte que le tenon d'enfichage (5) est verrouillée contre une extraction hors de l'alésage de réception (4), **caractérisé en ce qu'**à l'état enfiché du raccord enfichable (1), un élément support (10) entourant la partie intérieure (3) et mis en prise par emboîtement de forme avec un bourrelet annulaire (9) ou un évidement de la partie intérieure (3) est en appui en direction axiale d'une part sur la partie extérieure (2) et d'autre part sur la partie intérieure (3) et, à l'état monté, est sous tension.

2. Raccord enfichable (1) selon la revendication 1, **caractérisé en ce qu'**en position de préverrouillage, des coudes d'extrémité (37) des branches (35, 36) s'engagent dans des évidements (32) dans la partie extérieure (2) et maintiennent les branches (35, 36) dans une position d'écartement en dehors de l'alésage de réception (4) de la partie extérieure (2).

3. Raccord enfichable (1) selon la revendication 2, **caractérisé en ce que** les branches (35, 36) peuvent être écartées en tirant sur une entretoise (34) de l'élément de retenue (33) et peuvent être amenées de la position de verrouillage dans la position de préverrouillage, et inversement peuvent être amenées de la position de préverrouillage dans la position de verrouillage par pression sur l'entretoise (34).

4. Raccord enfichable (1) selon l'une des revendications précédentes, **caractérisé en ce que** les branches (35, 36) se trouvant dans la position de verrouillage et saillant dans l'alésage de réception peuvent être repoussées dans la rainure de verrouillage (8) par déformation élastique radiale lors de l'enfichage de la partie intérieure (3) dans l'alésage de réception (4).

5. Raccord enfichable (1) selon l'une des revendications précédentes, **caractérisé en ce que** la rainure de verrouillage (8) présente une profondeur inférieure au diamètre des branches (35, 36) de sorte que les branches (35, 36) ne pénètrent pas entièrement dans la rainure de verrouillage (8).

6. Raccord enfichable (1) selon l'une des revendications précédentes, **caractérisé en ce que** le tenon enfichable (5) se prolonge par une pièce de raccordement coaxiale (13) de plus grand diamètre qui sert de butée pour fixer axialement l'élément support (10).

7. Raccord enfichable (1) selon l'une des revendications précédentes, **caractérisé en ce que** la partie extérieure (2) est munie d'un joint (21) périphérique qui s'engage dans une surface de siège annulaire formée par une rainure (20) dans la partie extérieure (2) et qui, à l'état enfiché, repose de façon étanche contre le tenon d'enfichage (5).

8. Raccord enfichable (1) selon l'une des revendications précédentes, **caractérisé en ce que** les branches (35, 36) qui traversent les ouvertures (23) sont entourées latéralement par des parois latérales (27, 28) parallèles des fentes (24).

9. Raccord enfichable (1) selon l'une des revendications précédentes, **caractérisé en ce que** les parois latérales (28) des fentes (24) qui sont adjacentes à une deuxième extrémité (22) de la partie extérieure (2) sont, dans leur extension axiale, en forme d'arc de cercle et dépassent des ouvertures (23).

10. Raccord enfichable (1) selon l'une des revendications précédentes, **caractérisé en ce que** les fentes (24) sont inclinées, au moins dans leurs zones d'extrémité, par rapport au plan s'étendant perpendiculairement à l'axe longitudinal (25) de la partie extérieure (2).

11. Raccord enfichable (1) selon l'une des revendications précédentes, **caractérisé en ce que** l'inclinaison des fentes (24) est comprise environ entre 2° et 75°.

12. Raccord enfichable (1) selon l'une des revendications précédentes, **caractérisé en ce que** les fentes (24) débouchent dans une rainure annulaire (42) réalisée dans l'alésage de réception (4).
